Europäisches Patentamt

European Patent Office

Office européen des brevets

(19)

(11) Publication number: **0 033 186**

A1

## (12) EUROPEAN PATENT APPLICATION

(21) Application number: **81300019.7**

(22) Date of filing: **06.01.81**

(51) Int. Cl.³: **F 16 B 4/00**
**B 60 J 7/04**

(30) Priority: **26.01.80 GB 8002695**

(43) Date of publication of application:
**05.08.81 Bulletin 81/31**

(84) Designated Contracting States:
**BE DE FR GB IT NL**

(71) Applicant: **BRITAX WEATHERSHIELDS LIMITED**
**151 Bishop Street**
**Birmingham B5 7EH(GB)**

(72) Inventor: **Fisher, Sidney Edward**
**645 Fox Hollies Road Hall Green**
**Birmingham B28 9DW(GB)**

(74) Representative: **Hollinghurst, Antony**
**BRITAX CENTRAL RESEARCH & DEVELOPMENT**
**Kingsbury Road Curdworth**
**Sutton Coldfield West Midlands B76 9EQ(GB)**

(54) Method of attaching a U-shaped member.

(57) In order to attach a member of U-shaped cross-section (30) to the edge of a piece of sheet material (10), e.g. a frame for a sun roof to an opening in a vehicle roof, a strip (36) is placed in abutment with the sheet material (10) so as to run along the edge. The strip (36) contains a row of slots (38) and, during installation, a compressive force is applied to the limbs (20) and (32) of the U-shape to deflect the end (40) of the limb (32) into the recesses (38).

FIG. 3.

- 1 -

"Method of Attaching U-Shaped Member"

This invention relates to a method of attaching a member of U-shaped cross section so that it embraces an exposed edge. It has particular, but not exclusive, application to the attachment of a member to the edge of an·opening in a vehicle roof during installation of a sun roof.

Our European Patent Application No. 7930240.1 relates to a mounting ring which can be installed in an opening in a vehicle roof so as to provide a downwardly extending flange on the front and side edges of the opening, thereby avoiding the need to profile the vehicle roof itself. On the rear edge of the opening, the mounting ring is of U-shaped cross section, the limbs of the U-shape respectively lying above and below the vehicle roof. The present invention provides a means of securing this U-shaped side to the vehicle roof. The invention also has more general application to the attachment of a U-shaped member in circumstances where the appearance of one limb of the U-shaped member is of secondary consideration.

According to the invention, in a method of attaching a member of U-shaped cross section so that it embraces an edge of a body having first and second mutually parallel side surfaces, the side limbs of the U-shape being in abutment with said side surfaces, the method comprises forming a row of recesses in the first side surface at positions spaced from said edge by a distance equal to the length of a first limb of the U-shape, positioning the U-shaped member with its first limb over-lying the edge of the first surface and its other limb over-lying the edge of the second surface, and applying a compressive force between the ends of the limbs of the U-shape at the location of each of the recesses, the compressive force being applied to the first limb wholly within the area thereof which over-lies such recess.

When the invention is applied to the installation of a sun roof, the second surface of the body is the top surface of the vehicle roof.

The body having first and second surfaces may comprise a member of thickness less than the spacing between the side limbs of the U-shape together with a packing strip to bring the overall thickness up to the required level. The recesses can then be formed in the strip and may take the form of openings extending completely through the strip. The packing strip can also be dimensioned to serve as a reinforcing strip for the edge of the above-mentioned member.

Prior to installation, the limbs of the U-shape may be splayed outwardly at up to about $10^{\circ}$. This facilitates installation when it is necessary for the U-shaped member to be presented to the edge of the body at an angle to the first and second surfaces thereof.

An embodiment of the invention will now be described, by way of example, with reference to the accompanying drawings in which:

Figure 1 is a perspective view of a vehicle roof in which a sun roof has been installed using a mounting ring having a U-shaped formation at the rear edge of the opening.

Figure 2 is a perspective view from below of the mounting ring shown in Figure 1; and

Figure 3 is a cross section on the line 3-3 in Figure 1.

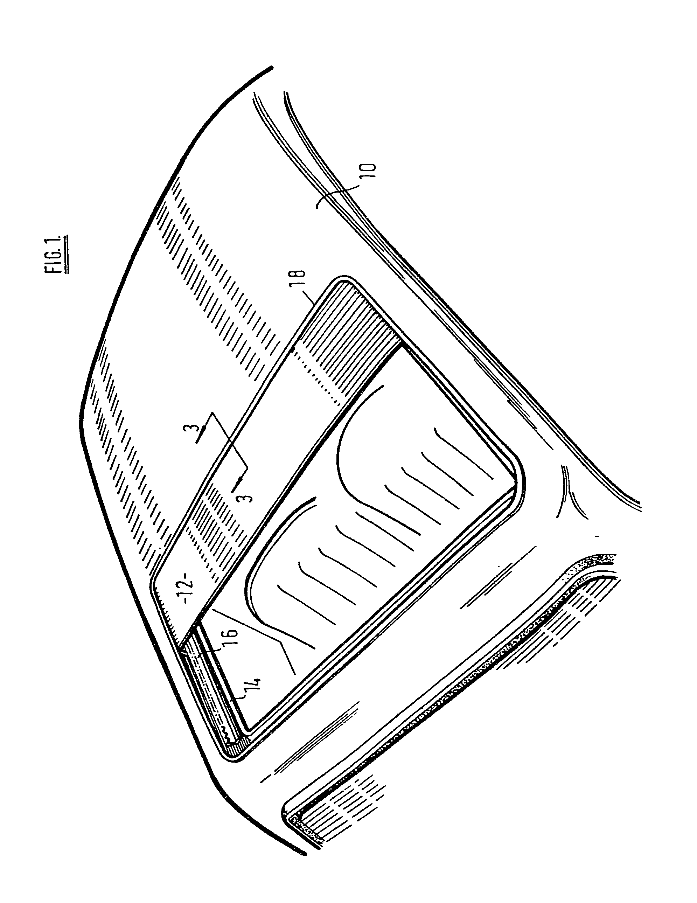

Referring to Figure 1, a vehicle roof 10 has a rectangular opening which is arranged to be closed by a sliding panel 12 of a sunshine roof assembly incorporating a drain tray 14. The panel 12 is mounted on tracks 16 which are secured to the drain tray 14.

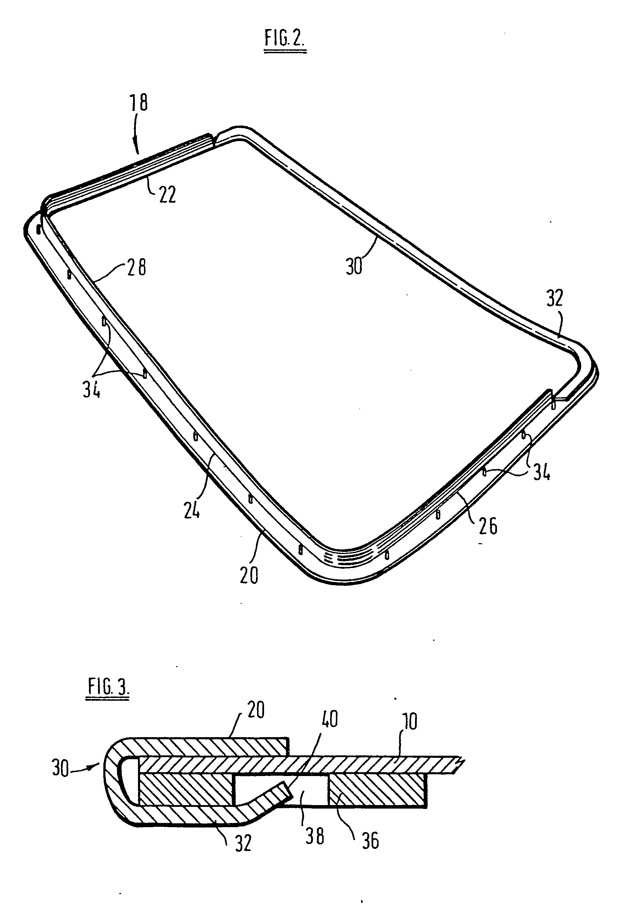

Referring to Figure 2, a mounting ring 18 for use in installing the sliding roof assembly shown in Figure 1 comprises a substantially rectangular frame, on each side of which is a laterally extending flange 20. Three sides 22, 24 and 26 have a second flange 28 extending perpendicular to the flange 12 from its inner edge so as to form an L-shaped cross section. The fourth side 30 also has a second flange 32 attached to the inner edge of the first flange 20 but the second flange 32 is turned back so as to form a U-shaped cross section with the limbs of the U-shape splayed at about 10$^{\circ}$. Fixing studs 34 project from the flange 20, parallel to the flange 28, on the sides 22, 24 and 26 of the frame.

The rectangular opening in the vehicle roof 10 provides an easy clearance for receiving the second flange 28 on the sides 22, 24 and 26 of the ring 18. With the aid of a template, fixing holes are formed in the vehicle roof along the edge at the front and sides of the vehicle, the holes being spaced so that each corresponds with a respective stud 34. A stiffening strip 36 (Figure 3) is located beneath the rear edge of the rectangular opening and the ring 18 is then fitted from above by inserting the rear edge of the opening, together with the stiffening strip 36, into the recess of the U-shaped cross section of the fourth side 22 of the ring, the 10$^{\circ}$ splay of the limbs of the U-shape facilitating insertion at an angle to the horizontal sufficient to permit the studs 34 to clear the car roof 10. The rest of the mounting ring is then lowered so that the flange 20 rests on the upper surface of the vehicle roof 10, with the studs 34, projecting through the above mentioned holes therein.

Referring particularly to Figure 3, the stiffening strip 36 has a series of slots 38 uniformly positioned along its length. The major dimensions of the slots 38 are disposed parallel to the length of the strip 36 and their centre lines coincide with the free end of the flange 32. After the ring 18 has been fitted into the opening in the vehicle roof 10, a compressive force is applied between the flanges 20 and 32 so as to reduce the 10$^{\circ}$ spaly therebetween. The tool used for applying this compressive force has a lower operative face of smaller area than that of each of the slots 38 and an upper face of
much larger area. Consequently, whenever the tool is applied
in alignment with one of the slots 38, the free edge 40 of
the flange 32 is bent over into the corresponding slot 38,
thereby reducing any tendancy for the flanges 20 and 32 to
spring back towards their splayed condition when the compressive
force is removed. The large area of the upper tool face ensures
that the finish on the flange 20 is not damaged thereby.

　　　　The invention thus provides a method of applying a
U-shaped strip to cover an edge of a piece of sheet material
without the need to provide any form of opening or projection
of the sheet material and without distorting or otherwise
damaging the finish of one of the two limbs of the U-shape.

CLAIMS

1.      A method of attaching a member (30) of U-shaped cross section so that it embraces an edge of a body (10, 36) having first and second mutually parallel side surfaces, the side limbs of the U-shape being in abutment with said side surfaces, characterised by forming a row of recesses (38) in the first side surface at positions spaced from said edge by a distance equal to the length of a first limb (32) of the U-shape, positioning the U-shaped member (30) with its first limb (32) over-lying the edge of the first surface and its other limb (20) over-lying the edge of the second surface, and applying a compressive force between the ends of the limbs of the U-shape at the location at each of the recesses (38), the compressive force being applied to the first limb (32) wholly within the area thereof which over-lies such recess.

2.      A method according to claim 1, characterised in that the body (10) having first and second surfaces comprises a member of thickness less than the spacing between the side limbs (20, 32) of the U-shape together with a packing strip (36).

3.      A method according to claim 1 or 2, characterised in that the side limbs (20, 32) of the U-shape are splayed outwardly at up to 10$^{o}$.

4.      A method according to claim 1,2 or 3, characterised in that the member (30) of U-shaped cross section is part of a sunshine roof assembly (12) and the second surface of the body is the top surface of a vehicle roof.

FIG.1.

2|2

FIG.2.

FIG.3.

# EUROPEAN SEARCH REPORT

Application number

EP 81 30 0019.7

## DOCUMENTS CONSIDERED TO·BE RELEVANT

| Category | Citation of document with indication, where appropriate, of relevant passages | Relevant to claim |
|---|---|---|
| | DE - A - 2 402 952 (NISSAN MOTOR CO.) <br> * fig. 5A and 5B * <br> & US - A - 3 909 919 <br> -- | 1 |
| A | DE - A - 1 918 408 (VERMEULEN-HOLLANDIA) <br> -- | |
| A | DE - U - 1 992 874 (H.T. GOLDE GMBH & CO.) <br> ---- | |

### CLASSIFICATION OF THE APPLICATION (Int. Cl ³)

F 16 B   4/00

B 60 J   7/.04

### TECHNICAL FIELDS SEARCHED (Int. Cl.³)

B 21 D 39/00

B 60 J   7/00

F 16 B   4/00

F 16 B   5/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 02-04-1981 | BECKER |